# EUROPEAN PATENT APPLICATION

(11) **EP 1 475 936 A1**
(43) Date of publication of application: **10.11.2004**
(21) Application number: 03291087.9
(22) Date of filing: 06.05.2003
(51) Int. Cl.: H04L 29/06, H04L 29/08

(54) **Method, apparatuses and software product for establishing a network connection or invoking a communication service automatically**

(71) Applicant: ALCATEL, 75008 Paris (FR)
(72) Inventor: Westerhuis, Frans, 2000 Antwerpen (BE)
(74) Representative: Brose, Gerhard

(57) **Abstract**

The present invention relates to a method for selecting a network connection or invoking a service automatically, depending on criteria that have been configured by the end user beforehand where the steps of selecting a connection or invoking a service, is performed by creating an access script (SC) e.g. a Call Processing Language CPL script, for a user, where said script comprising criteria and rules controlling which connection has to be established or which service has to be engaged, and interpreting and executing the script when said connection or service is required. Furthermore, the present invention relates to an access client (AC), an access server (AS), and a computer software product.

## Description

The present invention relates to a method establishing a network connection or invoking a service automatically. Furthermore, the present invention relates to an access client, an access server, and a computer software product.

As the use of telecommunication networks has increased over recent years, the number and availability of service providers and access providers has likewise increased. In a typical arrangement by which home or business users gain access to e.g. the Internet, the users enter into a contractual agreement with an Internet service provider, whereby the user is allowed to access the Internet by means of a point of presence operated by an Internet service provider, which might be reachable via a digital subscriber line access system, hosted by an access provider.

While the forgoing access model has been used by many service providers and access providers, it has exhibited several problems in practice. For example, individual users who contract with one Internet service provider may have access to only one point of presence. If the assigned point of presence experiences heavy loads during, for example, peak hours of use, some users are likely to experience busy signals and are unable to access the network. If the user desires to ensure access to the network at all times, the user often must choose an alternative. It might even be necessary having access to multiple points of presence because there is no single point of presence providing access to all required services.

Portals like the Alcatel 5142 Personalized Service Selector, are software solutions which enable e.g. service providers to deliver value-added IP services to end users.

Via such a personalized and captive portal, the service selector facilitates the selection of and the access to e.g. a virtual private network like a corporate network etc.

Using an access portal a user has to select manually a service before accessing it. In view of the foregoing, it would be an advancement in the art to provide systems and methods for selecting network accesses and services via multiple access systems of multiple access providers and service providers automatically.

Such a system and method for the management and invocation of communication services from a service provider by a client is e.g. known from the US Patent Application No. 6,434,619.

The invention focuses the problem of a personalized automatic network access and service selection.

The problem is solved by a method for selecting a network connection or invoking a service automatically, depending on criteria that have been configured by the end user beforehand, where selecting a connection or invoking a service is performed by the further steps of creating an access script for a user, where said script comprising criteria and rules controlling which connection has to be established or which service has to be engaged, and interpreting and executing the script when said connection or service is required.

The problem is also solved by an access server comprising means for establishing a network connection or invoking a service, further comprising a memory for personalized access scripts (SC) where said script comprising criteria and rules controlling which connection has to be established or which service has to be invoked. The access server might further comprise a script interpreter for interpreting and executing the access script when said connection or service is required.

And the problem is solved by an access client comprising means for establishing a network connection or invoking a service, further comprising a memory for personalized access scripts, where said script comprising criteria and rules controlling which connection has to be established or which service has to be invoked, and a script interpreter for interpreting and executing the script when said connection or service is required. The access client might further comprising retrieval means for connecting to an access server and retrieving a personalized access script.

The problem is targeted by an access script comprising criteria and rules controlling which connection has to be established or which service has to be invoked.

And the problem is targeted by a computer software product comprising programming means for interpreting access script, where said script comprising criteria and rules controlling which connection has to be established or which service has to be invoked.

In other words, the invention provides a mechanism that sets up a particular network connection or invokes a service, automatically, depending on criteria that have been defined within a script beforehand.

These criteria can be defined from e.g. history of accessed networks or invoked services and might be time of the day, day of the week, the number of times a network is accessed in the past, or just a preferred virtual private network.

The innovative step is not only the criteria used in the script but the fact that the script sets up automatically connections. This mechanism can be based on a script language like Call Processing Language (CPL), a language for user control of internet telephony services, described e.g. in the abstract of the corresponding request for comment, RFC 2824. This script can be used to describe and control the automatic setup of a connection by an end user. It can run on either access servers or access clients or even interact on both. It is meant to be simple, extensible, easily edited e.g. by script editors, and independent of operating systems. It is thought to be suitable for running on a server where users may not be allowed to execute arbitrary programs. An extended Call Processing Language might be used to describe and control services and connections like Internet or telephony services.

Accordingly, it is an object and advantage of the present invention to increase the user friendliness by e.g. automatically connecting a user to a preferred virtual private network.

Another advantage of the present invention is that scripting technology is already available.

A further advantage of the present invention is the location independence. Script deployment on a server has the advantage that scripts can always be executed independent of the client terminal.

Yet another advantage of the present invention is that scripting portal configurations might be standardized in future, providing a homogenization in todays heterogeneous networking infrastructure.

These and many other objects and advantages of the present invention will become apparent to those of ordinary skill in the art from a consideration of the drawings and description, where
**Figure. 1** is a schematic drawing of a prior art access client.
**Figure. 2** is a schematic drawing of an access client according to the invention.
**Figure. 3** is a schematic drawing of an access client and an access server according to the invention.

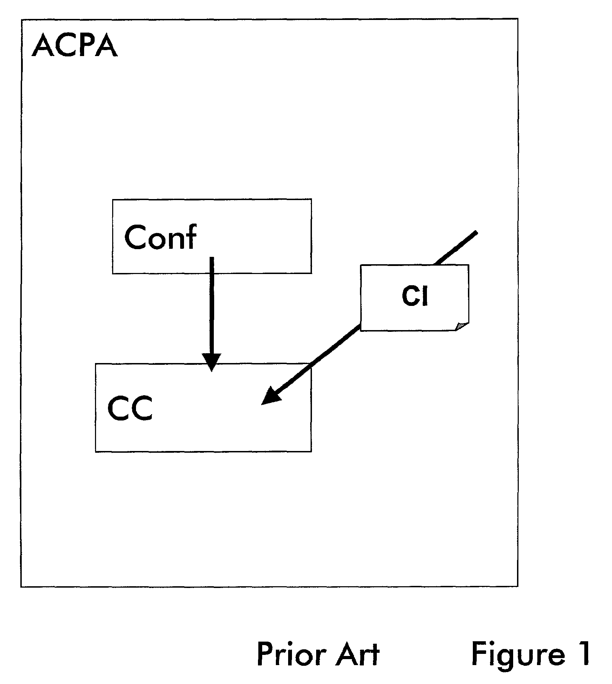

Figure. 1 shows an access client ACPA comprising a connection controller CC that is configured by a configuration entity Conf. The connection controller CC is instructed by connection or invocation demands CI originated by e.g. applications or user interaction or even by an operating system. Therefore the connection controller CC often provides an application interface to setup connections like virtual private network connections etc. The configuration entity Conf provides the necessary locators like internet protocol addresses, telephone numbers, account information and the like.

When invoking a service or demanding a connection, a corresponding demand CI is sent to the connection controller CC. The connection controller CC retrieves the necessary configuration information from the configuration entity Conf and establishes the connection or invokes the service.

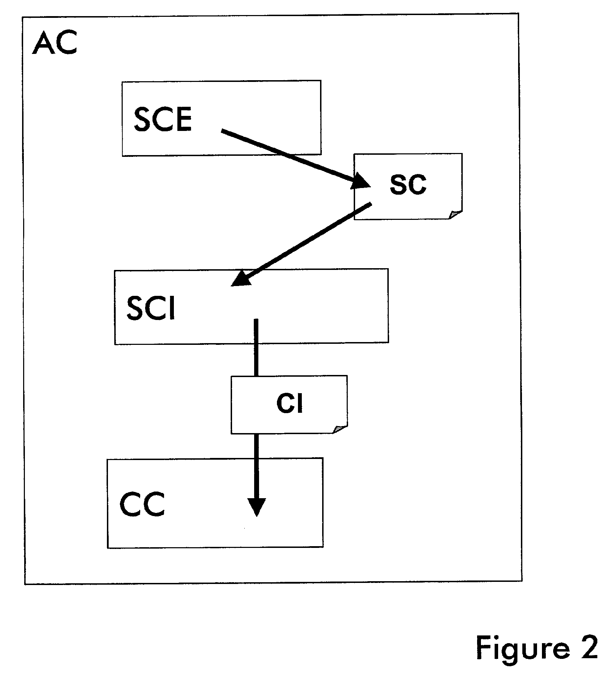

Figure. 2 shows an access client AC according to the invention. The access client AC comprises beside the connection controller CC a script editor SCE and a script interpreter SCI. The script editor generates an access script SC. This access script is interpreted or executed by the script interpreter in order to instruct the connection controller CC via connection or invocation demands CI. The indirection using access scripts SC in order to instruct the connection controller CC via connection or invocation demands CI hides connection details, e.g. equivalent connections or services or providers from an application view. The application has only to run a suitable access script SC on the script interpreter SCl. And the access script content might select appropriate connection and service parameters by e.g. using a nested case statement. The script might even comprise commands for determining the availability or the quality of a connection or a service, enabling a dependent reacting.

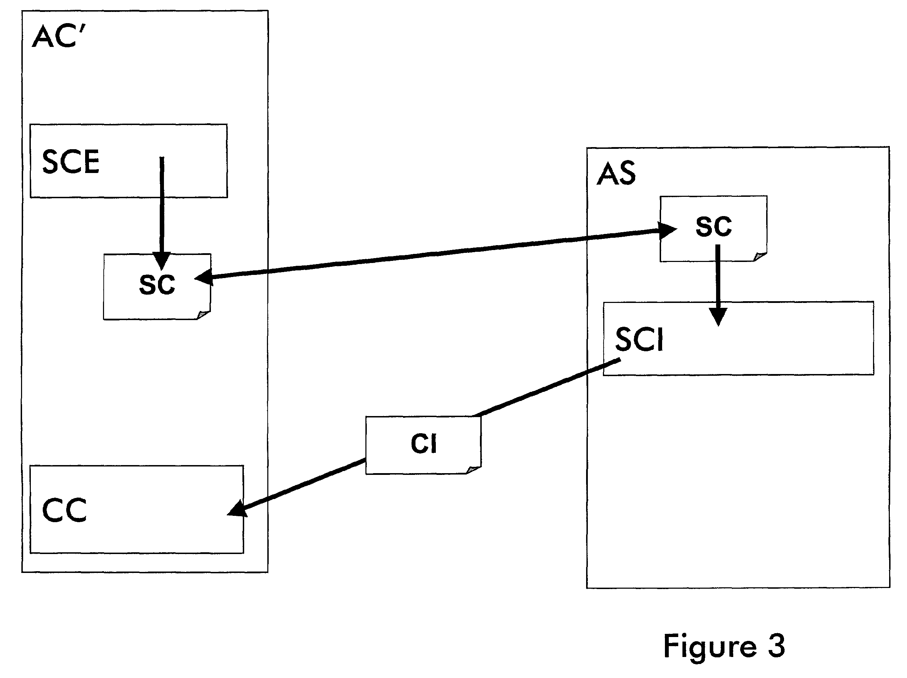

Figure. 3 shows a further access client AC' and an access server AS. The further access client AS' comprises a script editor SCE, a connection controller CC, and the access server comprises a script interpreter SCl.

An access script is transmitted from the further access client AC to the access server AS. There it is stored and executed by the script interpreter SCI in order to invoke services or establish connections via instruction the connection controller CC of the further access client AC' via connection or service invocation demands CI.

Interpreting or only deploying access scripts SC at the server side, i.e. at the access server AS enhances location independence. Meaning multiple clients can share a (single sourced) script at multiple locations.

An example scenario might be that during the working days and working hours a home working employee gets automatically connection to his corporate virtual private network. But during the weekend and evenings he will get automatically a connection to his internet service provider. The configuration of his automatic connections is determined by the decisions made in the script, depending on the time of the day, depending on the date, month, year etc.

A second example scenario might be that when an end user connects very often to the same network. The end user configures the script such that the script will connect to the most used network. When the end user suddenly connects very often to another network, the script will automatically connect the end user to the other network.

A third example scenario might be an end user with a favorite service provider. The end user configures the script such that the script selects the favorite service provider automatically, if possible.

The access script might be based on extended markup language expressing the command and condition features. The software technology for implementing a script language interpreter loop is well established, see e.g. page 3,4 in the textbook of Aho, Sethi, and Ullman, "Compilers, Priciples Techniques, and Tools", Addisson-Wesely, 1986.

## Claims

1. A method for selecting a network connection or invoking a service automatically, depending on criteria that have been configured by the end user beforehand comprising the steps of
- selecting a connection or invoking a service, and
**characterized in that** selecting a connection or invoking a service is performed by the further steps of
- creating an access script (SC) for a user, where said script comprising criteria and rules controlling which connection has to be established or which service has to be engaged, and
- interpreting and executing the script when said connection or service is required.

2. The method according to claim 1, where said access script (SC) is interpreted at an access server (AS).

3. The method according to claim 1, where said script (SC) is interpreted at an access client (AC).

4. The method according to claim 1, where said access script (SC) is created based on past network connections and service usage.

5. An access server (AS) comprising means for establishing a network connection or invoking a service, **characterized in that** it further comprises a memory for a personalized access script (SC), where said script comprising criteria and rules controlling which connection has to be established or which service has to be invoked.

6. The access server (AS) according to claim 5, **characterized in that** it further comprises a script interpreter (SCI) for interpreting and executing the access script (SC) when said connection or service is required.

7. An access client (AC) comprising means for establishing a network connection or invoking a service, **characterized in that** it further comprises a memory for personalized access scripts (SC), where said script comprising criteria and rules controlling which connection has to be established or which service has to be invoked, and a script interpreter (SCI) for interpreting and executing the script when said connection or service is required.

8. The access client (AC) according to claim 7, **characterized in that** it further comprises retrieval means for connecting to an access server and retrieving a personalized access script (SC).

9. A computer software product comprising programming means for interpreting access script (SC), where said script comprising criteria and rules controlling which connection has to be established or which service has to be invoked.
